# EUROPÄISCHE PATENTSCHRIFT

(11) **EP 4 509 314 B1**
(45) Veröffentlichungstag und Bekanntmachung des Hinweises auf die Patenterteilung: **02.09.2026**
(21) Anmeldenummer: 24189708.1
(22) Anmeldetag: 19.07.2024
(51) Int. Cl.: B32B 27/30, C08L 23/00, A47B 96/20

(54) **BAUELEMENT, INSBESONDERE PLATTENELEMENT**
BUILDING ELEMENT, IN PARTICULAR PANEL ELEMENT
ÉLÉMENT DE CONSTRUCTION, EN PARTICULIER ÉLÉMENT DE PANNEAU

(30) Priorität: 16.08.2023 DE 202023104643 U
(43) Veröffentlichungstag der Anmeldung: 19.02.2025
(73) Patentinhaber: REHAU Industries SE & Co. KG, 95111 Rehau (DE)
(72) Erfinder: Affeldt, Jens-Uwe, 08258 Breitenfeld (DE)

(56) Entgegenhaltungen:
- EP-A1- 3 670 182
- DE-U1- 202011 051 022
- DE-U1- 202015 102 073
- DE-U1- 202016 103 409

## Beschreibung

Die Erfindung betrifft ein Bauelement, insbesondere Plattenelement, umfassend wenigstens ein Trägerelement mit wenigstens einer Decklage, wenigstens einem Profilelement, wobei das Profilelement an wenigstens einer Stirnseite des Trägerelementes über wenigstens eine Funktionsschicht fixiert ist, gemäß dem Oberbegriff des Anspruches 1.

Bauelemente, insbesondere Plattenelemente wie z.B. Tischplatten, Arbeitsplatten, Schranktüren, Seitenwände von Möbeln wie Schränke, Regale, Tische etc. werden im Allgemeinen aus holzartigen Werkstoffen hergestellt und an ihren Oberflächen dekoriert.

Dabei sind die Oberflächen beispielsweise mit dekorierten Folien, Papieren und dergleichen bedeckt. Weiterhin können die Oberflächen der Bauelemente auch mit einer Bedruckung und/oder einer Farbbeschichtung bzw. Lackierung versehen sein.

Die schmalen Stirnseiten der Bauelemente müssen gegen das Eindringen von Feuchtigkeit und aus Gründen der Optik bzw. des Designs vollflächig abgedeckt sein.

Für die Abdeckung der schmalen Stirnseiten derartiger Bauelemente verwendet man in den meisten Fällen sogenannte Kantenleisten, Kantenstreifen, Umleimer vorteilhafterweise aus thermoplastischen Werkstoffen. Das Anbringen derartiger Kantenleisten erfolgt in vielen Fällen maschinell beispielsweise durch automatisierte Vorrichtungen.

Diese Kantenleisten werden in diesen automatisierten Vorrichtungen, sogenannten Kantenanleimmaschinen an die betreffende schmale Stirnseite der Bauelemente angebracht und mittels beispielsweise einer Funktionsschicht fixiert.

Die Breite der Kantenleisten ist dabei im Allgemeinen größer als die Dicke der schmalen Stirnseiten der Bauelemente, sodass nach dem Fixieren der Kantenleisten deren überstehende Seitenkanten im Allgemeinen materialabtragend entfernt und nachträglich diese Oberfläche durch beispielsweise Polieren optimiert ist.

Nachteiliger Weise wird hierdurch das bereits auf den Kantenleisten aufgebrachte Dekor nachträglich entfernt und durch diese Nacharbeit entsteht bei einem beispielsweise viereckigen Bauelement durch die abgearbeiteten Seitenkanten der Kantenleisten ein anderes Design, welches als sog. "Rahmeneffekt" negativerweise beschrieben ist.

In der EP 1080854 A2 ist ein Verfahren zum Befestigen von Deckleisten/Kantenleisten auf den Stirnseiten von Möbelplatten offenbart. Das Verfahren zum Befestigen von Deckleisten bzw. Kantenleisten aus thermoplastischem Kunststoff an den schmalen Stirnseiten von Möbelplatten, insbesondere Spanplatten, Faserplatten oder dergleichen Holzwerkstoffplatten wird so umgesetzt, dass die Deckleisten/Kantenleisten unmittelbar auf die Stirnseiten aufgebracht und mit den Stirnseiten in adhäsiven Verbund gebracht werden.

Es können die Deckleisten/Kantenleisten an den schmalen Stirnseiten der Möbelplatten angeschweißt werden. Dabei soll die Fuge bzw. die Kleberfuge zwischen der Kantenleiste und der Möbelplatte mechanisch oder thermisch versiegelt werden. Dazu werden die Deckleisten/Kantenleisten mit beidseitigen Überstand in Bezug auf die jeweiligen schmalen Stirnseiten verwendet, sodass die Überstände zur Fugenversiegelung aufgeschmolzen werden und dass danach das aufgeschmolzene Material der Deckleiste bzw. Kantenleiste unter Erzeugung von mit den Stirnseiten deckungsgleichen Deckleisten entfernt wird, zum Beispiel materialabtragend mittels einer Ziehklinge oder dergleichen.

In der DE 10006661 C1 ist ein weiteres Verfahren zur Herstellung von Möbelplatten mit Kunststoffzier- und schutzleisten (Kantenleisten) beschrieben. Bei diesem Verfahren, dass auch einer maschinellen Durchführung zugänglich ist, wird ein Überstand der Kantenleiste bezüglich eines angrenzenden Abschnitts des Flächenelementes, der Möbelplatte, zu einem großen Teil materialabtragend beseitigt, vorzugsweise durch einen Fräsvorgang. Danach wird zumindest die spanend bearbeitete sowie mit Weißbruchstellen versehene Fläche der Kantenleiste mit einem Multikomponenten- Schmieröl mit hoher Kriechfähigkeit benetzt und anschließend der verbleibende Restüberstand mit einer Walzenbürste entfernt und somit ein glatter Übergang von Flächenelement und Kantenstreifen gebürstet.

Das Multikomponenten-Schmieröl mit der hohen Kriechfähigkeit dringt dabei in sämtliche Ritzen, insbesondere im Bereich der Weißbruchstellen ein und benetzt diese Oberfläche vollständig. Durch die nachfolgende Bearbeitung der vollständig benetzten Kunststoffoberfläche der Kantenleiste mit den Walzenbürsten soll das Multikomponenten-Schmieröl für ein sauberes und glattes Abtragen durch die Bürsten sorgen, so dass die Weißbruchstellen und auch Leim- bzw. Kleberreste vollständig entfernt werden.

Nachteilig bei diesen Verfahren wird gesehen, dass der Aufwand zur Herstellung eines derartigen Flächenelementes, Möbelplatte sehr hoch ist durch die teuren Materialien sowie die Anzahl der unterschiedlichen Vor- und Nachbearbeitungsvorgänge.

Weiter nachteilig bei diesen Verfahren wird gesehen, dass das verwendete Multikomponenten-Schmieröl die Oberflächen des Flächenelementes, der Möbelplatte, sowie auch die Klebestelle sowie den Kantenstreifen verschmutzt und unter Umständen diese Oberflächen chemisch angreift.

Ebenfalls nachteilig bei diesen Verfahren ist, dass bei Möbelplatten, deren Oberflächen nach der spanenden Bearbeitung der Schmalseiten der Kantenleisten, bedruckt und/oder lackiert werden, auch die Schmalseiten der Kantenleisten zumindest teilweise bedruckt und/oder lackiert werden müssen und die Bedruckung und/oder die Lackierung nicht an diesen Schmalseiten ausreichend haftet.

Darüber hinaus sind die Druckschriften DE 20 2015 102 073 U1, EP 3 670 182 A1, DE 20 2011 051 022 U1 und DE 20 2016 103 409 U1 nützlich für das Verständnis des technischen Hintergrunds dieser Erfindung.

Hier setzt die Erfindung ein, die sich die Aufgabe gestellt hat, die Nachteile des bekannten Standes der Technik zu überwinden und ein Bauelement aufzuzeigen, welches wirtschaftlich und kostengünstig herstellbar ist, welches in den bekannten automatisierten Fertigungsverfahren problemlos herstellbar ist und bei dem die optischen bzw. haptischen Eigenschaften insbesondere der Schmalseiten eines Profilelementes erhalten bleiben und dem optischen bzw. haptischen Eigenschaften des Bauelements angeglichen sind.

Diese Aufgabe wird erfindungsgemäße durch die Merkmale des Anspruches 1 gelöst. Weitere vorteilhafte Ausgestaltungen sind in den Unteransprüchen beschrieben.

Es hat sich überraschend herausgestellt, Bauelement, insbesondere Plattenelement, umfassend wenigstens ein Trägerelement mit wenigstens einer Decklage, wenigstens einem Profilelement, wobei das Profilelement an wenigstens einer Stirnseite des Trägerelementes über wenigstens eine Funktionsschicht fixiert ist, mit wenigstens einem Leistenkern aus wenigstens einem polymeren Material, wobei der Leistenkern eine Vorderseite, sowie eine dieser gegenüberliegend angeordnete, Rückseite aufweist, wobei der Leistenkern in Profillängsrichtung (L) wenigstens eine Schmalseite aufweist, wobei der Werkstoff des Leistenkerns ausgewählt ist aus der Gruppe der styrolbasierten Polymere, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrol- Acrylnitril (SAN), sich dadurch auszeichnet, dass der

Werkstoff des Leistenkerns etwa 5 bis 50 Gew.-%, bevorzugt etwa 10 bis 45 Gew.-%, besonders bevorzugt 15 bis 35 Gew.-%, bezogen auf sein Gesamtgewicht, wenigstens einen Füllstoff aufweist, wobei der Füllstoff ausgewählt ist aus der Gruppe der Schichtsilikate, sowie Carbonate bzw. Sulfate von Barium sowie Kalzium, und dergleichen. Hierdurch ist es nun möglich, Bauelemente zur Verfügung zu stellen, die wirtschaftlich und kostengünstig herstellbar sind, sich in den bekannten automatisierten Fertigungsverfahren problemlos herstellen lassen, bei der die optischen bzw. haptischen Eigenschaften insbesondere der Schmalseiten der Profilelemente erhalten bleiben und dem optischen bzw. haptischen Eigenschaften der Möbelplatte angeglichen sind. So ist es insbesondere bei einer nachträglichen Dekorierung der Oberflächen der Bauelemente mit fixierten Profilanordnungen nun erstmals möglich, an sich bekannte Bedruckungs- sowie Lacksysteme kostengünstig aufzubringen, die auch eine ausreichende Haftung am Werkstoff der Profilanordnung erreichen.

Weiterhin wurde festgestellt, dass bei einer Dekorierung der Oberfläche der Möbelplatte mit bspw. CPL- Schichtstoff, HPL- Schichtstoff sowie harzgetränkten Papierwerkstoffen, die Haftung am Werkstoff der Profilanordnung optimiert ist. CPL- Schichtstoff ist dabei ein "Continuous Pressure Laminate", welcher im kontinuierlichen Verfahren aus mehreren Lagen Papier und Harz hergestellt sind, mit Dicken von etwa 300 µm. HPL- Schichtstoff ist ein "High Pressure Laminate", welches im Hochdruckpress- Verfahren hergestellt ist, in Plattenform aus mehreren Lagen Papier und Harz, mit Dicken von etwa 500 µm. Harzgetränkte Papierwerkstoffe, harzgetränkte Papiere, bspw. Melaminpapiere mit Dicken von etwa 30 bis 100 µm. Ein weiterer Vorteil besteht darin, dass auch eine bessere Adhäsion des Werkstoffes des Leistenkernes zu Deckschichten aus polymeren Werkstoffen wie bspw. PET, PP, ABS realisierbar ist.

Der Füllstoff im Werkstoff des Leistenkerns weist eine mittlere Partikelgröße mit einem D50-Wert von etwa 0,2 bis 15 µm, bevorzugt 0,5 bis 10 µm, besonders bevorzugt 1 bis 8 µm gemäß DIN 66165-1:2016-08 auf. Ebenfalls vorteilhaft bei dem Bauelement ist, dass der Füllstoff im Werkstoff des Leistenkerns eine Partikelgröße mit einem D98- Wert von etwa 15 µm, bevorzugt kleiner 15 µm, besonders bevorzugt kleiner 10 µm gemäß DIN 66165-1:2016-08 aufweist.

Das Bauelement lässt sich somit wirtschaftlich und kostengünstig herstellen.

Das Bauelement ist weiter so ausgebildet, dass der Leistenkern und/oder die wenigstens eine Schmalseite der Profilanordnung nach wenigstens einer materialabtragenden Bearbeitung wenigstens teilweise eine strukturierte Oberfläche aufweist.

Die Oberfläche des Leistenkerns und/oder der wenigstens einen Schmalseite der Profilanordnung weist nach einer materialabtragenden Bearbeitung eine mittlere Rautiefe R_{z} von etwa 0,3 µm bis 15 µm, bevorzugt 0,5 µm bis 10 µm, besonders bevorzugt 1 µm bis 8 µm gemäß ISO 21920-2:2021-12 . Weiterhin weist die Oberfläche der wenigstens einen Schmalseite der Profilanordnung nach einer materialabtragenden Bearbeitung eine mittlere Rautiefe R_{z} von vorzugsweise maximal 10 µm gemäß ISO 21920-2:2021-12 auf. Vorteilhaft beim Bauelement ist weiter, dass die Oberfläche des Leistenkerns und/oder der wenigstens einen Schmalseite der Profilanordnung nach einer materialabtragenden Bearbeitung einen Mittenrauwert Rₐ von etwa 5 µm bis 40 µm, vorzugsweise etwa 10 µm bis 25 µm gemäß DIN EN ISO 4287:2010-07 aufweist.

Durch alle diese vorteilhaften Ausgestaltungen des Bauelements ist insbesondere der Werkstoff des Leistenkerns der Profilanordnung so herstellbar bzw. einstellbar, dass er sowohl wirtschaftlich als auch kostengünstig herstellbar ist, problemlos an die Schmalseiten von Bauplatten anbringbar ist und insbesondere bei einer nachträglichen Aufbringung von Bedruckungs- sowie Lackierersystemen eine ausreichende Haftung derselben aufweist.

Ein weiterer Vorteil des Bauelements ist, dass die, an der Stirnseite des Trägerelements angebrachte, Profilanordnung an wenigstens einer ihrer, in Profillängsrichtung (L) angeordneten, Schmalseite wenigstens eine Fase und/oder wenigstens einen Radius aufweist. Ebenso vorteilhaft bei dem Bauelement ist, dass die, an der Stirnseite des Trägerelements angebrachte, Profilanordnung an wenigstens einer ihrer, in Profillängsrichtung (L) angeordneten, Schmalseite nach wenigstens einer materialabtragenden Bearbeitung wenigstens eine Fase und/oder wenigstens einen Radius aufweist.

Vorteilhafterweise ist das Bauelement so ausgebildet, dass die wenigstens eine Fase und/oder der wenigstens eine Radius nach einer materialabtragenden Bearbeitung wenigstens teilweise eine strukturierte Oberfläche aufweist.

Weiter vorteilhaft bei dem Bauelement ist, dass die wenigstens eine Fase und/oder der wenigstens eine Radius nach wenigstens einer materialabtragenden Bearbeitung wenigstens teilweise eine mikroporöse Schaumstruktur aufweist.

Besonders vorteilhaft bei dem Bauelement ist, dass die wenigstens eine Fase und/oder der wenigstens eine Radius nach wenigstens einer materialabtragenden Bearbeitung eine mittlere Rautiefe R_{z} von etwa 0,3 µm bis 15 µm, bevorzugt 0,5 µm bis 10 µm, besonders bevorzugt 1 µm bis 8 µm gemäß ISO 21920-2:2021-12 aufweist. Weiterhin weist die Oberfläche der wenigstens einen Fase und/oder des wenigstens einen Radius der Profilanordnung nach einer materialabtragenden Bearbeitung eine mittlere Rautiefe R_{z} von vorzugsweise maximal 10 µm gemäß ISO 21920-2:2021-12 auf.

Ganz besonders vorteilhaft bei dem Bauelement ist weiter, dass die wenigstens eine Fase und/oder der wenigstens eine Radius nach wenigstens einer materialabtragenden Bearbeitung einen Mittenrauwert Rₐ von etwa 5 µm bis 40 µm, vorzugsweise etwa 10 µm bis 25 µm gemäß DIN EN ISO 4287:2010-07 aufweist.

Somit ist es insbesondere bei einer nachträglichen Dekorierung der Oberflächen der Bauelemente mit fixierten Profilanordnungen nun erstmals möglich, an sich bekannte Bedruckungs- sowie Lacksysteme kostengünstig aufzubringen, die auch eine ausreichende Haftung am Werkstoff des Leistenkernes der Profilanordnung erreichen.

In einer weiteren vorteilhaften Ausgestaltung ist das Bauelement so ausgebildet, dass das polymere Material des Leistenkerns der Profilanordnung eine Dichte von etwa 0,2 g/cm³ bis etwa 0,85 g/cm³, vorzugsweise 0,40 g/cm³ bis 0,70 g/cm³ gemäß DIN EN ISO 1183-1:2019-09, aufweist. Weiterhin vorteilhaft bei dem Bauelement ist auch, dass das polymere Material des Leistenkerns der Profilanordnung Bestandteile aufweist, die wenigstens teilweise eine Dichte von etwa 0,2 g/cm³ bis etwa 0,85 g/cm³, vorzugsweise 0,40 g/cm³ bis 0,70 g/cm³ gemäß DIN EN ISO 1183-1:2019-09 aufweisen.

Ganz besonders vorteilhaft bei dem Bauelement ist, dass der Leistenkern und/oder die wenigstens eine Schmalseite der Profilanordnung nach wenigstens einer materialabtragenden Bearbeitung eine mikroporöse Schaumstruktur aufweist.

Ebenfalls von Vorteil bei dem Bauelement ist, dass wenigstens eine Oberfläche des Trägerelements und die, an der Stirnseite angebrachte, Profilanordnung wenigstens teilweise eine Beschichtung aufweisen.

Das Bauelement zeichnet sich weiterhin dadurch aus, dass der Werkstoff des Leistenkerns einen Schmelzflussindex (MFI) von etwa 0,5 g bis 60 g/ 10 min., besonders bevorzugt 0,5 g bis 50 g/ 10 min. gemäß DIN ISO 1133-1:2012-03 bei 230 °C / 2,16 kg aufweist. Hierdurch lässt sich insbesondere die Profilanordnung des Bauelements wirtschaftlich und kostengünstig im an sich bekannten Urformen wie beispielsweise Extrusionsverfahren, Koextrusionsverfahren sowie Postkoextrusionsverfahren herstellen.

Weiter vorteilhaft bei dem Bauelement ist, dass der Werkstoff des Leistenkerns eine Härte Shore D/3 von etwa 45 bis 70, bevorzugt 50 bis 68 gemäß DIN EN ISO 868:2003-10 aufweist. Somit ist die Profilanordnung ausreichend fest / stabil am Bauelement anordenbar.

Die Profilanordnung weist vorteilhafterweise einen E- Modul in Höhe von wenigstens 1.400 MPa auf. Weiterhin weist die Profilanordnung eine Zugfestigkeit von wenigstens 30 MPa gemäß DIN EN ISO 527-1:2019-12 auf. Das Bauelement ist somit insbesondere im automatisierten Fertigungsverfahren problemlos und wirtschaftlich herstellbar.

Es hat sich weiterhin als vorteilhaft bei dem Bauelement erwiesen, dass die Profilanordnung und/oder das Bauelement wenigstens ein Identifizierungselement aufweist. Hierdurch ist insbesondere die Herkunft bzw. der Hersteller des Bauelements sowie beispielsweise Material bzw. Umweltdaten problemlos anbringbar bzw. auslesbar.

Das Bauelement zeichnet sich weiterhin dadurch aus, dass der Werkstoff des Leistenkerns wenigstens einen, teilweise anorganische und/oder organische Pigmente enthaltenden, Zusatzstoff in einer Menge von etwa 0,01 bis 5 Gew.-%, bevorzugt 0,02 bis 3,0 Gew.-%, bezogen auf die Gesamtmenge, eingelagert enthält.

Ebenfalls vorteilhaft bei dem Bauelement ist, dass der Zusatzstoff des Leistenkerns ausgewählt ist aus der Gruppe der Metalloxide, der Metallphosphate sowie der Metallsalze organischer Anionen.

Weiterhin vorteilhaft bei dem Bauelement ist, dass die Rückseite des Leistenkerns der Profilanordnung wenigstens abschnittsweise eine Funktionsschicht aufweist. Diese Funktionsschicht kann vorteilhafterweise eine sogenannte Haftvermittler-Schicht und/oder eine sogenannte Schmelzklebstoff-Schicht und/oder eine sogenannte polymere Funktionsschicht sein.

Das Bauelement ist vorteilhafterweise weiterhin so ausgebildet, dass der Werkstoff des Leistenkerns der Profilanordnung wenigstens eines der folgenden Additive enthält: Stabilisatoren zur Verbesserung der Beständigkeit gegen Lichteinwirkung, UV-Strahlung und Bewitterung; Stabilisatoren zur Verbesserung der thermischen und thermooxidativen Beständigkeit; Stabilisatoren zur Verbesserung der hydrolytischen Beständigkeit, Stabilisatoren zur Verbesserung der acidolytischen Beständigkeit, Gleitmittel, Entformungshilfen, farbgebende Additive, kristallisationsregulierende Substanzen und Nukleierungsmittel, Flammschutzmittel, Schlagzähmodifier, Füllstoffe und / oder Weichmacher aufweist.

In einer weiteren, ebenfalls vorteilhaften Ausgestaltung ist das Bauelement so ausgebildet, dass an der Vorderseite des Leistenkörpers des Profilelements und/oder am Bauelement wenigstens eine Deckschicht mit einer Dicke von etwa 2 bis 60 µm, vorzugsweise 5 bis 30 µm angeordnet ist.

Alternativ ist es möglich, dass das Bauelement und/oder die Profilanordnung unter Verwendung eines generativen Fertigungsverfahrens, bspw. durch ein 3-D-Druckverfahren, herstellbar ist.

Für die Herstellung des Bauelements und/oder der Profilanordnung sind vorteilhafterweise datenverarbeitungsmaschinenlesbare, dreidimensionale Modelle nutzbar.

Die Erfindung umfasst auch ein Verfahren zur Erzeugung eines datenverarbeitungsmaschinenlesbaren, dreidimensionalen Modells zur Verwendung in einem Herstellungsverfahren für ein Bauelement und/oder eine Profilanordnung.

Hierbei umfasst das Verfahren insbesondere auch die Eingabe von Daten, die ein Bauelement und/oder eine Profilanordnung darstellen, in eine Datenverarbeitungsmaschine und die Nutzung dieser Daten, ein Bauelement und/oder eine Profilanordnung als dreidimensionale Modelle darzustellen, wobei das dreidimensionale Modell geeignet ist, zur Nutzung bei der Herstellung eines Bauelement und/odereiner Profilanordnung.

Das Bauelement ist ganz oder teilweise unter Verwendung eines zeilenaufbauenden oder schichtaufbauenden Fertigungsverfahrens herstellbar. Dabei ist mit großem Vorteil ein 3D-Datensatz beim Aufbau oder bei der Herstellung nutzbar. Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf ein Bauelement und/oder eine Profilanordnung abgegeben wird und die reflektierte Energie empfangen wird, und wobei ein virtuelles dreidimensionales Modell eines Bauelement und/oder einer Profilanordnung unter Verwendung einer Computerunterstützten Design-Software erzeugt wird. Das Fertigungsverfahren kann ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting - EBM / Electron Beam Additive Manufacturing - EBAM) oder Verfestigen von Pulvermaterial mittels Binder (Binder Jetting) umfassen. Das Fertigungsverfahren kann ein generatives Freiraumverfahren, insbesondere Auftragsschweißen, Wax Deposition Modeling (WDM), Contour Crafting, Metall-Pulver-Auftragsverfahren (MPA), Kunststoff-Pulver-Auftragsverfahren, Kaltgasspritzen, Elektronenstrahlschmelzen (Electron Beam Welding - EBW) oder Schmelzeschichtungsverfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen.

Die Erfindung soll nun an diesen, nicht einschränkenden, Ausführungsbeispielen näher beschrieben werden.

Es zeigen:
- Figur 1:: perspektivische Darstellung eines Bauelements
- Figur 2:: perspektivische Teilschnittdarstellung eines Bauelements mit wenigstens einer Profilanordnung

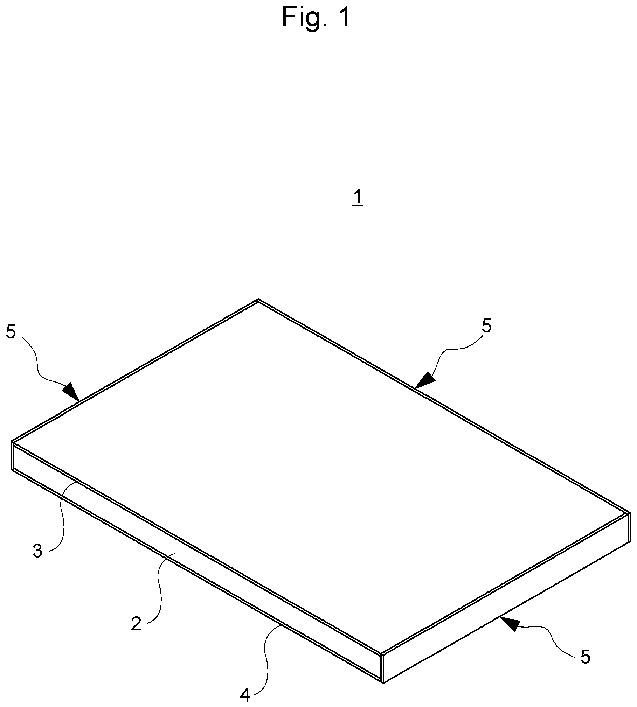

In der **Figur 1** ist eine perspektivische Darstellung eine Bauelements 1 dargestellt.

Das Bauelement 1, insbesondere Plattenelement, umfassend wenigstens ein Trägerelement 2 mit wenigstens einer Decklage 3, 4, wenigstens einem Profilelement 5, wobei das Profilelement 5 an wenigstens einer Stirnseite 21 des Trägerelementes 2 über wenigstens eine Funktionsschicht 7 fixiert ist, mit wenigstens einem Leistenkern 6 aus wenigstens einem polymeren Material, wobei der Leistenkern 6 eine Vorderseite 60, sowie eine dieser gegenüberliegend angeordnete, Rückseite 61 aufweist, wobei der Leistenkern 2 in Profillängsrichtung (L) wenigstens eine Schmalseite 8,9 aufweist, wobei der Werkstoff des Leistenkerns 5 ausgewählt ist aus der Gruppe der styrolbasierten Polymere, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrol- Acrylnitril (SAN). In diesem Ausführungsbeispiel ist der Werkstoff des Leistenkerns 6 ausgewählt aus der Gruppe Acrylnitril-Butadien-Styrol-Copolymer (ABS). Das Bauelement 1 zeichnet sich dadurch aus, dass der Werkstoff des Leistenkerns 6 etwa 5 bis 50 Gew.-%, bevorzugt etwa 10 bis 45 Gew.-%, besonders bevorzugt 15 bis 35 Gew.-%, bezogen auf sein Gesamtgewicht, wenigstens einen Füllstoff aufweist, wobei der Füllstoff ausgewählt ist aus der Gruppe der Schichtsilikate, sowie Carbonate bzw. Sulfate von Barium sowie Kalzium, und dergleichen. In diesem Ausführungsbeispiel weist der Werkstoff des Leistenkerns 6 etwa 25 Gew.-%, bezogen auf sein Gesamtgewicht, einen Füllstoff auf, der ausgewählt ist aus der Gruppe der Schichtsilikate.

Das Bauelement 1 zeichnet sich in diesem Ausführungsbeispiel dadurch aus, dass der Füllstoff im Werkstoff des Leistenkerns 6 eine mittlere Partikelgröße mit einem D50- Wert von etwa 0,2 bis 15 µm, bevorzugt 0,5 bis 10 µm, besonders bevorzugt 1 bis 8 µm gemäß DIN 66165-1:2016-08 aufweist. In diesem Ausführungsbeispiel weist der Füllstoff im Werkstoff des Leistenkerns 6 eine mittlere Partikelgröße mit einem D50-Wert von etwa 1,5 µm gemäß DIN 66165-1:2016-08 auf.

Das Bauelement 1 zeichnet sich weiterhin dadurch aus, dass der Füllstoff im Werkstoff des Leistenkerns 6 eine Partikelgröße mit einem D98- Wert von etwa 15 µm, bevorzugt kleiner 15 µm, besonders bevorzugt kleiner 10 µm gemäß DIN 66165-1:2016-08 aufweist.

Weiterhin ist das Bauelement 1 so ausgebildet, dass der Leistenkern 6 und/oder die wenigstens eine Schmalseite 8,9 der Profilanordnung 5 nach einer materialabtragenden Bearbeitung wenigstens teilweise eine strukturierte Oberfläche aufweist.

Das Bauelement 1 ist weiterhin so ausgebildet, dass die Oberfläche des Leistenkerns 6 und/oder der wenigstens einen Schmalseite 8,9 der Profilanordnung 5 nach einer materialabtragenden Bearbeitung eine mittlere Rautiefe R_{z} von etwa 0,3 µm bis 15 µm, bevorzugt 0,5 µm bis 10 µm, besonders bevorzugt 1 µm bis 8 µm gemäß ISO 21920-2:2021-12 aufweist.

Weiterhin weist die Oberfläche der wenigstens einen Schmalseite 8,9 der Profilanordnung 5 nach einer materialabtragenden Bearbeitung eine mittlere Rautiefe R_{z} von vorzugsweise maximal 10 µm gemäß ISO 21920-2:2021-12 auf.

In diesem Ausführungsbeispiel weist die Oberfläche der wenigstens einen Schmalseite 8,9 der Profilanordnung 5 nach einer materialabtragenden Bearbeitung eine mittlere Rautiefe R_{z} von etwa 9,5 µm gemäß ISO 21920-2:2021-12 auf.

Weiter ist das Bauelement 1 so ausgebildet, dass die Oberfläche des Leistenkerns 6 und/oder der wenigstens einen Schmalseite 8,9 der Profilanordnung 5 nach einer materialabtragenden Bearbeitung einen Mittenrauwert Rₐ von etwa 5 µm bis 40 µm, vorzugsweise etwa 10 µm bis 25 µm gemäß DIN EN ISO 4287:2010-07 aufweist.

Weiter ist das Bauelement 1 so ausgeführt, dass die, an der Stirnseite 21 des Trägerelements 2 angebrachte, Profilanordnung 5 an wenigstens einer ihrer, in Profillängsrichtung (L) angeordneten, Schmalseite 8,9 wenigstens eine Fase 80 und/oder wenigstens einen Radius 90 aufweist.

Das Bauelement 1 ist so ausgebildet, dass die wenigstens eine Fase 80 und/oder der wenigstens eine Radius 90 nach einer materialabtragenden Bearbeitung wenigstens teilweise eine strukturierte Oberfläche aufweist.

Das Bauelement 1 ist weiter so ausgebildet, dass der Werkstoff des Leistenkerns 6 der Profilanordnung 5 einen Schmelzflussindex (MFI) von etwa 0,5 g bis 60 g/ 10 min., besonders bevorzugt 0,5 g bis 50 g/ 10 min. gemäß DIN ISO 1133-1:2012-03 bei 230 °C / 2,16 kg aufweist. In diesem Ausführungsbeispiel weist der Werkstoff des Leistenkerns 6 einen Schmelzflussindex (MFI) von etwa 9 g/ 10 min. gemäß DIN ISO 1133-1:2012-03 bei 230 °C / 2,16 kg auf.

Weiterhin ist das Bauelement 1 so ausgeführt, dass der Werkstoff des Leistenkerns 6 der Profilanordnung 5 eine Härte Shore D/3 von etwa 45 bis 70, bevorzugt 50 bis 68 gemäß DIN EN ISO 868:2003-10 aufweist. In diesem Ausführungsbeispiel weist der Werkstoff des Leistenkerns 6 eine Härte Shore D/3 von etwa 60 gemäß DIN EN ISO 868:2003-10 auf.

Weiterhin ist das Bauelement 1 so ausgebildet, dass an der Vorderseite 3 des Profilelements 5 wenigstens eine Deckschicht mit einer Dicke von etwa 2 bis 60 µm, vorzugsweise 5 bis 30 µm angeordnet ist.

In diesem Ausführungsbeispiel ist das Bauelement 1 so ausgebildet, dass an der Vorderseite 3 des Profilelements 5 eine Deckschicht mit einer Dicke von etwa 10 µm angeordnet ist.

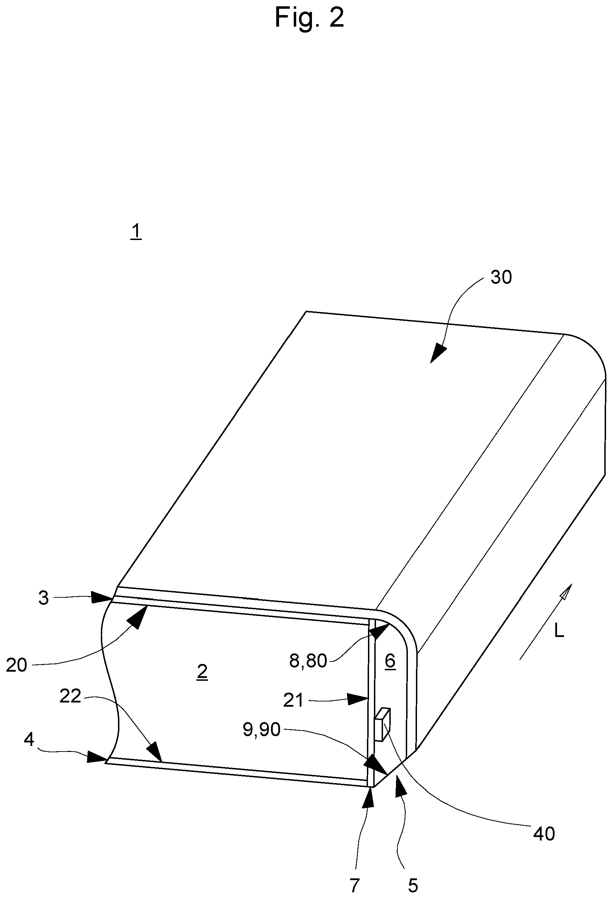

In der **Figur 2** ist eine perspektivische Teilschnittdarstellung eines Bauelements 1 mit wenigstens einer Profilanordnung 5 dargestellt.

Das Bauelement 1, insbesondere Plattenelement, umfassend wenigstens ein Trägerelement 2 mit wenigstens einer Decklage 3, 4, wenigstens einem Profilelement 5, wobei das Profilelement 5 an wenigstens einer Stirnseite 21 des Trägerelementes 2 über wenigstens eine Funktionsschicht 7 fixiert ist, mit wenigstens einem Leistenkern 6 aus wenigstens einem polymeren Material, wobei der Leistenkern 6 eine Vorderseite 60, sowie eine dieser gegenüberliegend angeordnete, Rückseite 61 aufweist, wobei der Leistenkern 6 in Profillängsrichtung (L) wenigstens eine Schmalseite 8,9 aufweist, wobei der Werkstoff des Leistenkerns 6 ausgewählt ist aus der Gruppe der styrolbasierten Polymere, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrol- Acrylnitril (SAN). In diesem Ausführungsbeispiel ist der Werkstoff des Leistenkerns 6 ausgewählt aus der Gruppe Styrol-Acrylnitril (SAN).

Das Bauelement 1 zeichnet sich dadurch aus, dass der Werkstoff des Leistenkerns 6 etwa 5 bis 50 Gew.-%, bevorzugt etwa 10 bis 45 Gew.-%, besonders bevorzugt 15 bis 35 Gew.-%, bezogen auf sein Gesamtgewicht, wenigstens einen Füllstoff aufweist, wobei der Füllstoff ausgewählt ist aus der Gruppe der Schichtsilikate, sowie Carbonate bzw. Sulfate von Barium sowie Kalzium, und dergleichen.

In diesem Ausführungsbeispiel weist der Werkstoff des Leistenkerns 6 etwa 30 Gew.-%, bezogen auf sein Gesamtgewicht, einen Füllstoff auf, wobei der Füllstoff ausgewählt ist aus der Gruppe der Carbonate von Calcium.

Das Bauelement 1 zeichnet sich in diesem Ausführungsbeispiel dadurch aus, dass der Füllstoff im Werkstoff des Leistenkerns 6 eine mittlere Partikelgröße mit einem D50- Wert von etwa 0,3 bis 15 µm, bevorzugt 0,5 bis 10 µm, besonders bevorzugt 1 bis 8 µm gemäß DIN 66165-1:2016-08 aufweist. In diesem Ausführungsbeispiel weist der Füllstoff im Werkstoff des Leistenkerns 6 eine mittlere Partikelgröße mit einem D50-Wert von etwa 2 µm gemäß DIN 66165-1:2016-08 auf.

Das Bauelement 1 zeichnet sich weiterhin dadurch aus, dass der Füllstoff im Werkstoff des Leistenkerns 6 eine Partikelgröße mit einem D98- Wert von etwa 15 µm, bevorzugt kleiner 15 µm, besonders bevorzugt kleiner 10 µm gemäß DIN 66165-1:2016-08 aufweist.

Weiterhin ist das Bauelement 1 so ausgebildet, dass der Leistenkern 6 und/oder die wenigstens eine Schmalseite 8,9 der Profilanordnung 5 nach einer materialabtragenden Bearbeitung wenigstens teilweise eine strukturierte Oberfläche aufweist.

Das Bauelement 1 ist weiterhin so ausgebildet, dass die Oberfläche des Leistenkerns 6 und/oder der wenigstens einen Schmalseite 8,9 der Profilanordnung 5 nach einer materialabtragenden Bearbeitung eine mittlere Rautiefe R_{z} von etwa 0,3 µm bis 15 µm, bevorzugt 0,5 µm bis 10 µm, besonders bevorzugt 1 µm bis 8 µm gemäß ISO 21920-2:2021-12 aufweist.

Weiterhin weist die Oberfläche der wenigstens einen Schmalseite 8,9 der Profilanordnung 5 nach einer materialabtragenden Bearbeitung eine mittlere Rautiefe R_{z} von vorzugsweise maximal 10 µm gemäß ISO 21920-2:2021-12 auf.

In diesem Ausführungsbeispiel weist die Oberfläche der wenigstens einen Schmalseite 8,9 der Profilanordnung 5 nach einer materialabtragenden Bearbeitung eine mittlere Rautiefe R_{z} von etwa 2 µm gemäß ISO 21920-2:2021-12 auf.

Weiter ist das Bauelement 1 so ausgebildet, dass die Oberfläche des Leistenkerns 6 und/oder der wenigstens einen Schmalseite 8,9 der Profilanordnung 5 nach einer materialabtragenden Bearbeitung einen Mittenrauwert Rₐ von etwa 5 µm bis 40 µm, vorzugsweise etwa 10 µm bis 25 µm gemäß DIN EN ISO 4287:2010-07 aufweist.

Weiter ist das Bauelement 1 so ausgeführt, dass die, an der Stirnseite 21 des Trägerelements 2 angebrachte, Profilanordnung 5 an wenigstens einer ihrer, in Profillängsrichtung (L) angeordneten, Schmalseite 8,9 wenigstens eine Fase 80 und/oder wenigstens einen Radius 90 aufweist.

Das Bauelement 1 ist so ausgebildet, dass die wenigstens eine Fase 80 und/oder der wenigstens eine Radius 90 nach einer materialabtragenden Bearbeitung wenigstens teilweise eine strukturierte Oberfläche aufweist.

Weiterhin ist das Bauelement 1 so ausgebildet, dass die wenigstens eine Fase 80 und/oder der wenigstens eine Radius 90 nach einer materialabtragenden Bearbeitung eine mittlere Rautiefe R_{z} von etwa 0,3 µm bis 15 µm, bevorzugt 0,5 µm bis 10 µm, besonders bevorzugt 1 µm bis 8 µm gemäß ISO 21920-2:2021-12 aufweist.

Weiterhin weist die Oberfläche der wenigstens einen Fase 80 und/oder des wenigstens einen Radius 90 der Profilanordnung nach einer materialabtragenden Bearbeitung eine mittlere Rautiefe R_{z} von vorzugsweise maximal 10 µm gemäß ISO 21920-2:2021-12 aufweist. In diesem Ausführungsbeispiel weist Oberfläche der wenigstens einen Fase 80 und/oder des wenigstens einen Radius 90 der Profilanordnung 5 nach einer materialabtragenden Bearbeitung eine mittlere Rautiefe R_{z} von etwa 8,5 µm gemäß ISO 21920-2:2021-12 auf.

Die Profilanordnung 1 ist weiter so ausgebildet, dass der Werkstoff des Leistenkerns 6 einen Schmelzflussindex (MFI) von etwa 0,5 g bis 60 g/ 10 min., besonders bevorzugt 0,5 g bis 50 g/ 10 min. gemäß DIN ISO 1133-1:2012-03 bei 230 °C / 2,16 kg aufweist. In diesem Ausführungsbeispiel weist der Werkstoff des Leistenkerns 6 einen Schmelzflussindex (MFI) von etwa 15 g / 10 min. gemäß DIN ISO 1133-1:2012-03 bei 230 °C / 2,16 kg auf.

Weiterhin ist die Profilanordnung 1 so ausgeführt, dass der Werkstoff des Leistenkerns 6 eine Härte Shore D/3 von etwa 45 bis 70, bevorzugt 50 bis 68 gemäß DIN EN ISO 868:2003-10 aufweist. In diesem Ausführungsbeispiel weist der Werkstoff des Leistenkerns 6 eine Härte Shore D/3 von etwa 59 gemäß DIN EN ISO 868:2003-10 auf.

Das Bauelement 1 zeichnet sich dadurch aus, dass die Profilanordnung 5 an wenigstens einer Stirnseite 21 des Trägerelements 2 angebracht, insbesondere fixiert, ist.

In diesem Ausführungsbeispiel ist das Bauelement 1 so ausgebildet, dass die Profilanordnung 5 über eine Funktionsschicht 7, welche an der Rückseite 4 des Leistenkerns 6 der Profilanordnung 5 angeordnet ist, mit der Stirnseite 21 des Trägerelements 2 stoffschlüssig verbunden, insbesondere fixiert ist.

Das Bauelement 1ist vorteilhafterweise so ausgebildet, dass die, an der Stirnseite 21 des Trägerelements 2 angebrachte, Profilanordnung 5 an wenigstens einer ihrer, in Profillängsrichtung L angeordneten, Schmalseite 8,9 wenigstens eine Fase 80 und/oder wenigstens einen Radius 90 aufweist.

Das Bauelement 1 ist weiterhin so ausgebildet, dass sie wenigstens ein Identifizierungselement aufweist. In diesem Ausführungsbeispiel ist das Bauelement 1 so ausgebildet, dass das Identifizierungselement 40 an der Rückseite 4 des Leistenkerns 6 der Profilanordnung 5 angeordnet ist. Es liegt jedoch auch im Rahmen der Erfindung, dass das Identifizierungselement 40 an der Vorderseite 3 und/oder im Inneren des Leistenkerns 6 der Profilanordnung 5 angeordnet ist.

Weiterhin vorteilhaft ist das Bauelement 1 so ausgebildet, dass wenigstens eine Oberfläche 20 des Trägerelements 2 und die, an der Stirnseite 21 angebrachte, Profilanordnung 5 an wenigstens einer ihrer, in Profillängsrichtung L angeordneten, Schmalseite 8,9 wenigstens teilweise eine Beschichtung 30 aufweisen.

In diesem Ausführungsbeispiel ist die Beschichtung 30 vollflächig auf der, als Sichtseite ausgebildeten, Oberfläche 20 des Trägerelements 2 angeordnet und bedeckt dabei zumindest teilweise die erste Schmalseite 8 des Leistenkerns 6 der Profilanordnung 5.

Es liegt aber auch im Rahmen der Erfindung, dass die Beschichtung 30 die gesamte Schmalseite 8,9 des Leistenkerns 6 der Profilanordnung 5 bedeckt.

Vorteilhafterweise ist die Beschichtung 30 so ausgebildet, dass sie das gleiche/identische Dekor aufweist, wie die Vorderseite 3 des Leistenkerns 6 der Profilanordnung 5.

Die Beschichtung 30 kann dabei als Bedruckungs- sowie Lacksystem ausgebildet sein. So ist es insbesondere bei einer nachträglichen Dekorierung der Oberflächen 20,22 des Trägerelements 2 mit fixierten Profilanordnungen 5 nun erstmals möglich, an sich bekannte Bedruckungs- sowie Lacksysteme kostengünstig aufzubringen, die auch eine ausreichende Haftung am Werkstoff des Leistenkerns 6 der Profilanordnung 5 erreichen.

Es liegt aber auch im Rahmen der Erfindung, dass die Beschichtung 30 als Folie, insbesondere als polymere Folie ausgebildet ist.

Die als polymere Folie ausgebildete Beschichtung 30 weist dabei vorteilhafterweise eine Dicke etwa 5 bis 100 µm, bevorzugt 20 bis 80 µm auf.

## Patentansprüche

1. Bauelement (1), insbesondere Plattenelement, umfassend wenigstens ein Trägerelement (2) mit wenigstens einer Decklage (3, 4), wenigstens einem Profilelement (5), wobei das Profilelement (5) an wenigstens einer Stirnseite (21) des Trägerelements (2) über wenigstens eine Funktionsschicht (7) fixiert ist, mit wenigstens einem Leistenkern (6) aus wenigstens einem polymeren Material, wobei der Leistenkern (6) eine Vorderseite (60), sowie eine dieser gegenüberliegend angeordnete, Rückseite (61) aufweist, wobei der Leistenkern (2) in Profillängsrichtung (L) wenigstens eine Schmalseite (8,9) aufweist, wobei der Werkstoff des Leistenkerns (5) ausgewählt ist aus der Gruppe der styrolbasierten Polymere, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrol- Acrylnitril (SAN), wobei der Werkstoff des Leistenkerns (6) etwa 5 bis 50 Gew.-%, bevorzugt etwa 10 bis 45 Gew.-%, besonders bevorzugt 15 bis 35 Gew.-%, bezogen auf sein Gesamtgewicht, wenigstens einen Füllstoff aufweist, wobei der Füllstoff ausgewählt ist aus der Gruppe der Schichtsilikate, sowie Carbonate bzw. Sulfate von Barium sowie Kalzium, und dergleichen,
**dadurch gekennzeichnet, dass**
der Füllstoff im Werkstoff des Leistenkerns (6) eine mittlere Partikelgröße mit einem D50- Wert von etwa 0,2 bis 15 µm, bevorzugt 0,5 bis 10 µm, besonders bevorzugt 1 bis 8 µm gemäß DIN 66165-1:2016-08 aufweist und, dass
die Oberfläche des Leistenkerns (6) und/oder der wenigstens einen Schmalseite (8,9) der Profilanordnung (5) nach einer materialabtragenden Bearbeitung eine mittlere Rautiefe R_{z} von etwa 0,3 µm bis 15 µm, bevorzugt 0,5 µm bis 10 µm, besonders bevorzugt 1 bis 8 µm, vorzugsweise maximal 10 µm gemäß ISO 21920-2:2021-12 aufweist, sodass bei einer nachträglichen Dekorierung der Oberflächen der Bauelemente mit fixierten Profilanordnungen, an sich bekannte Bedruckungs- sowie Lacksysteme kostengünstig aufbringbar sind, die auch eine ausreichende Haftung am Werkstoff der Profilanordnung erreichen.

2. Bauelement (1) nach einem der vorhergehenden Ansprüche, **dadurch gekennzeichnet, dass** der Füllstoff im Werkstoff des Leistenkerns (6) eine Partikelgröße mit einem D98- Wert von etwa 15 µm, bevorzugt kleiner 15 µm, besonders bevorzugt kleiner 10 µm gemäß DIN 66165-1:2016-08 aufweist.

3. Bauelement (1) nach einem der vorhergehenden Ansprüche, **dadurch gekennzeichnet, dass** die Oberfläche der wenigstens einen Schmalseite (8,9) der Profilanordnung (5) nach einer materialabtragenden Bearbeitung eine mittlere Rautiefe R_{z} von vorzugsweise maximal 10 µm gemäß ISO 21920-2:2021-12 aufweist.

4. Bauelement (1) nach einem der vorhergehenden Ansprüche, **dadurch gekennzeichnet, dass** die, an der Stirnseite (21) des Trägerelements (2) angebrachte, Profilanordnung (5) an wenigstens einer ihrer, in Profillängsrichtung (L) angeordneten, Schmalseite (8,9) wenigstens eine Fase (80) und/oder wenigstens einen Radius (90) aufweist.

5. Bauelement (1) nach Anspruch 4, **dadurch gekennzeichnet, dass** die wenigstens eine Fase (80) und/oder der wenigstens eine Radius (90) nach einer materialabtragenden Bearbeitung wenigstens teilweise eine strukturierte Oberfläche aufweist.

6. Bauelement (1) nach Anspruch 4 bis 5, **dadurch gekennzeichnet, dass** die wenigstens eine Fase (80) und/oder der wenigstens eine Radius (90) nach einer materialabtragenden Bearbeitung wenigstens teilweise eine mikroporöse Schaumstruktur aufweist.

7. Bauelement (1) nach Anspruch 4 bis 6, **dadurch gekennzeichnet, dass** die wenigstens eine Fase (80) und/oder der wenigstens eine Radius (90) nach einer materialabtragenden Bearbeitung eine mittlere Rautiefe von etwa 0,3 µm bis 15 µm, bevorzugt 0,5 µm bis 10 µm, besonders bevorzugt 1 bis 8 µm vorzugsweise maximal 10 µm gemäß ISO 21920-2:2021-12 aufweist.

8. Bauelement (1) nach Anspruch 4 bis 7, **dadurch gekennzeichnet, dass** die Oberfläche der wenigstens einen Fase (80) und/oder des wenigstens einen Radius (90) der Profilanordnung (5) nach einer materialabtragenden Bearbeitung eine mittlere Rautiefe R_{z} von vorzugsweise maximal 10 µm gemäß ISO 21920-2:2021-12 aufweist.

9. Bauelement (1) nach einem der vorhergehenden Ansprüche, **dadurch gekennzeichnet, dass** wenigstens eine Oberfläche (20,22) des Trägerelements (2) und die, an der Stirnseite (21) angebrachte, Profilanordnung (5) wenigstens teilweise eine Beschichtung (30) aufweist.

## Claims

1. Component (1), in particular a panel element, comprising at least one carrier element (2) having at least one cover layer (3, 4), at least one profile element (5), wherein the profile element (5) is fixed to at least one end face (21) of the carrier element (2) via at least one functional layer (7), having at least one strip core (6) made of at least one polymeric material, wherein the strip core (6) has a front side (60) and a rear side (61) arranged opposite thereto, wherein the strip core (2) has, in the longitudinal profile direction (L), at least one narrow side (8, 9), wherein the material of the strip core (5) is selected from the group of styrene-based polymers, such as polystyrene (PS) or styrene-butadiene copolymer having a predominant styrene content (SB) or acrylonitrile-styrene-acrylate copolymers (ASA) or acrylonitrile-butadiene-styrene copolymers (ABS) or styrene-acrylonitrile (SAN), wherein the material of the strip core (6) has, based on its total weight, approximately 5 to 50 wt.%, preferably approximately 10 to 45 wt.%, particularly preferably 15 to 35 wt.%, of at least one filler, wherein the filler is selected from the group of phyllosilicates, and carbonates or sulfates of barium and calcium, and the like,
**characterized in that**
the filler in the material of the strip core (6) has an average particle size with a D50 value of approximately 0.2 to 15 µm, preferably 0.5 to 10 µm, particularly preferably 1 to 8 µm according to DIN 66165-1:2016-08, and **in that**
the surface of the strip core (6) and/or of the at least one narrow side (8, 9) of the profile arrangement (5), after material-removing machining, has an average roughness depth Rz of approximately 0.3 µm to 15 µm, preferably 0.5 µm to 10 µm, particularly preferably 1 to 8 µm, preferably at most 10 µm according to ISO 21920-2:2021-12, so that, in the subsequent decoration of the surfaces of the components having fixed profile arrangements, printing and lacquer systems known per se can be applied cost-effectively, which also achieve sufficient adhesion to the material of the profile arrangement.

2. Component (1) according to one of the preceding claims, **characterized in that** the filler in the material of the strip core (6) has a particle size with a D98 value of approximately 15 µm, preferably less than 15 µm, particularly preferably less than 10 µm according to DIN 66165-1:2016-08.

3. Component (1) according to one of the preceding claims, **characterized in that** the surface of the at least one narrow side (8, 9) of the profile arrangement (5), after material-removing machining, has an average roughness depth Rz of preferably at most 10 µm according to ISO 21920-2:2021-12.

4. Component (1) according to one of the preceding claims, **characterized in that** the profile arrangement (5) attached to the end face (21) of the carrier element (2) has, on at least one of its narrow sides (8, 9) arranged in the longitudinal profile direction (L), at least one chamfer (80) and/or at least one radius (90).

5. Component (1) according to claim 4, **characterized in that** the at least one chamfer (80) and/or the at least one radius (90), after material-removing machining, has at least partially a structured surface.

6. Component (1) according to claims 4 to 5, **characterized in that** the at least one chamfer (80) and/or the at least one radius (90), after material-removing machining, has at least partially a microporous foam structure.

7. Component (1) according to claims 4 to 6, **characterized in that** the at least one chamfer (80) and/or the at least one radius (90), after material-removing machining, has an average roughness depth of approximately 0.3 µm to 15 µm, preferably 0.5 µm to 10 µm, particularly preferably 1 to 8 µm, preferably at most 10 µm according to ISO 21920-2:2021-12.

8. Component (1) according to claims 4 to 7, **characterized in that** the surface of the at least one chamfer (80) and/or of the at least one radius (90) of the profile arrangement (5), after material-removing machining, has an average roughness depth Rz of preferably at most 10 µm according to ISO 21920-2:2021-12.

9. Component (1) according to one of the preceding claims, **characterized in that** at least one surface (20, 22) of the carrier element (2) and the profile arrangement (5) attached to the end face (21) at least partially have a coating (30).

## Revendications

1. Élément de construction (1), en particulier élément de panneau, comprenant au moins un élément porteur (2) avec au moins une couche de parement (3, 4), au moins un élément profilé (5), l'élément profilé (5) étant fixé sur au moins une face frontale (21) de l'élément porteur (2) par l'intermédiaire d'au moins une couche fonctionnelle (7), avec au moins une âme de baguette (6) constituée d'au moins un matériau polymère, l'âme de baguette (6) présentant une face avant (60), ainsi qu'une face arrière (61) disposée à l'opposé de celle-ci, l'âme de baguette (2) présentant, dans la direction longitudinale du profilé (L), au moins un petit côté (8, 9), le matériau de l'âme de baguette (5) étant choisi dans le groupe des polymères à base de styrène, tels que le polystyrène (PS) ou un copolymère styrène-butadiène présentant une proportion prédominante de styrène (SB) ou des copolymères acrylonitrile-styrène-acrylate (ASA) ou des copolymères acrylonitrile-butadiène-styrène (ABS) ou styrène-acrylonitrile (SAN), le matériau de l'âme de baguette (6) comprenant environ 5 à 50 % en poids, de préférence environ 10 à 45 % en poids, de manière particulièrement préférée 15 à 35 % en poids, rapportés à son poids total, d'au moins une charge, la charge étant choisie dans le groupe des phyllosilicates, ainsi que des carbonates ou sulfates de baryum ainsi que de calcium, et similaires, **caractérisé en ce que**
la charge dans le matériau de l'âme de baguette (6) présente une granulométrie moyenne avec une valeur D50 d'environ 0,2 à 15 µm, de préférence 0,5 à 10 µm, de manière particulièrement préférée 1 à 8 µm selon DIN 66165-1:2016-08 et **en ce que**
la surface de l'âme de baguette (6) et/ou du au moins un petit côté (8, 9) de l'agencement profilé (5), après un usinage par enlèvement de matière, présente une profondeur moyenne de rugosité Rz d'environ 0,3 µm à 15 µm, de préférence 0,5 µm à 10 µm, de manière particulièrement préférée 1 à 8 µm, de préférence au maximum 10 µm selon ISO 21920-2:2021-12, de sorte que, lors d'une décoration ultérieure des surfaces des éléments de construction avec agencements profilés fixés, des systèmes d'impression ainsi que de laque connus en soi peuvent être appliqués de manière économique, lesquels atteignent également une adhérence suffisante sur le matériau de l'agencement profilé.

2. Élément de construction (1) selon l'une des revendications précédentes, **caractérisé en ce que** la charge dans le matériau de l'âme de baguette (6) présente une granulométrie avec une valeur D98 d'environ 15 µm, de préférence inférieure à 15 µm, de manière particulièrement préférée inférieure à 10 µm selon DIN 66165-1:2016-08.

3. Élément de construction (1) selon l'une des revendications précédentes, **caractérisé en ce que** la surface du au moins un petit côté (8, 9) de l'agencement profilé (5), après un usinage par enlèvement de matière, présente une profondeur moyenne de rugosité Rz de préférence au maximum 10 µm selon ISO 21920-2:2021-12.

4. Élément de construction (1) selon l'une des revendications précédentes, **caractérisé en ce que** l'agencement profilé (5), appliqué sur la face frontale (21) de l'élément porteur (2), présente sur au moins l'un de ses petits côtés (8, 9), disposés dans la direction longitudinale du profilé (L), au moins un chanfrein (80) et/ou au moins un rayon (90).

5. Élément de construction (1) selon la revendication 4, **caractérisé en ce que** le au moins un chanfrein (80) et/ou le au moins un rayon (90), après un usinage par enlèvement de matière, présente au moins partiellement une surface structurée.

6. Élément de construction (1) selon les revendications 4 à 5, **caractérisé en ce que** le au moins un chanfrein (80) et/ou le au moins un rayon (90), après un usinage par enlèvement de matière, présente au moins partiellement une structure de mousse microporeuse.

7. Élément de construction (1) selon les revendications 4 à 6, **caractérisé en ce que** le au moins un chanfrein (80) et/ou le au moins un rayon (90), après un usinage par enlèvement de matière, présente une profondeur moyenne de rugosité d'environ 0,3 µm à 15 µm, de préférence 0,5 µm à 10 µm, de manière particulièrement préférée 1 à 8 µm, de préférence au maximum 10 µm selon ISO 21920-2:2021-12.

8. Élément de construction (1) selon les revendications 4 à 7, **caractérisé en ce que** la surface du au moins un chanfrein (80) et/ou du au moins un rayon (90) de l'agencement profilé (5), après un usinage par enlèvement de matière, présente une profondeur moyenne de rugosité Rz de préférence au maximum 10 µm selon ISO 21920-2:2021-12.

9. Élément de construction (1) selon l'une des revendications précédentes, **caractérisé en ce qu'**au moins une surface (20, 22) de l'élément porteur (2) et l'agencement profilé (5), appliqué sur la face frontale (21), présentent au moins partiellement un revêtement (30).
